(19) Europäisches Patentamt
European Patent Office
Office européen des brevets

(11) **EP 3 942 375 B1**

(12) **FASCICULE DE BREVET EUROPEEN**

(45) Date de publication et mention
de la délivrance du brevet:
**06.09.2023 Bulletin 2023/36**

(21) Numéro de dépôt: **20703281.4**

(22) Date de dépôt: **12.02.2020**

(51) Classification Internationale des Brevets (IPC):
***B01F 25/00*** *(2022.01)*

(52) Classification Coopérative des Brevets (CPC):
**G05B 23/0235; G05B 23/0283; G06Q 50/06;**
C02F 3/1278; C02F 2303/14; G05B 13/0265;
G05B 2219/2605; Y02W 10/10

(86) Numéro de dépôt international:
**PCT/EP2020/053651**

(87) Numéro de publication internationale:
**WO 2020/193001 (01.10.2020 Gazette 2020/40)**

(54) **MÉTHODE DE DÉTECTION D'ANOMALIES DANS UNE INSTALLATION DE TRAITEMENT DES EAUX METTANT EN OEUVRE UN APPAREIL D'INJECTION D'OXYGÈNE DANS UN BASSIN D'ÉPURATION**

**ERKENNUNGSMETHODE VON ANOMALIEN IN EINER WASSERAUFBEREITUNGSANLAGE, BEI DER EIN SAUERSTOFFINJEKTIONSGERÄT IN EINEM KLÄRBECKEN BENUTZT WIRD**

**METHOD FOR DETECTING ANOMALIES IN A WATER TREATMENT FACILITY USING AN APPARATUS FOR INJECTING OXYGEN INTO A WATER TREATMENT RETENTION BASIN**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.03.2019 EP 19305358**

(43) Date de publication de la demande:
**26.01.2022 Bulletin 2022/04**

(73) Titulaire: **L'AIR LIQUIDE, SOCIETE ANONYME
POUR L'ETUDE ET
L'EXPLOITATION DES PROCEDES GEORGES
CLAUDE
75007 Paris (FR)**

(72) Inventeur: **BOURGEOIS, Thomas**
**78350 Les Loges-En-Josas (FR)**

(74) Mandataire: **Air Liquide**
**L'Air Liquide S.A.**
**Direction de la Propriété Intellectuelle**
**75, Quai d'Orsay**
**75321 Paris Cedex 07 (FR)**

(56) Documents cités:
**WO-A1-2012/160300     WO-A1-2016/132108**

**Description**

La présente invention concerne le domaine du traitement des eaux.

Et plus précisément la présente invention s'intéresse à la détection d'anomalies de fonctionnement de stations de traitement des eaux, anomalies liées à des disfonctionnement d'appareils d'injection d'oxygène dans les bassins d'épuration. Cet oxygène est utilisé par la biomasse présente dans les bassins pour consommer la pollution présente dans l'eau.

Les documents suivants illustrent des exemples de tels appareils : WO2012160300A1, EP-995 485, FR-2594112A1.

Ces appareils d'injection sont, comme tous robots, sujets à des pannes.

A la connaissance de la Demanderesse, il n'y a pas aujourd'hui de propositions techniques pour détecter à l'avance des pannes sur de tels appareils, les pannes se produisent sur ces installations et elles sont traitées « sur le tas », au cas par cas. Certains acteurs proposent, pour contrer ces pannes, d'effectuer des révisions régulières de ces appareils, voire de les changer régulièrement. Mais ces révisions ou ces changements en avance sont forcément coûteux.

La présente invention souhaite alors proposer une nouvelle méthode de détection en avance de certaines de ces pannes, permettant ainsi de rallonger le temps entre les révisions, et d'augmenter la durée de vie des appareils.

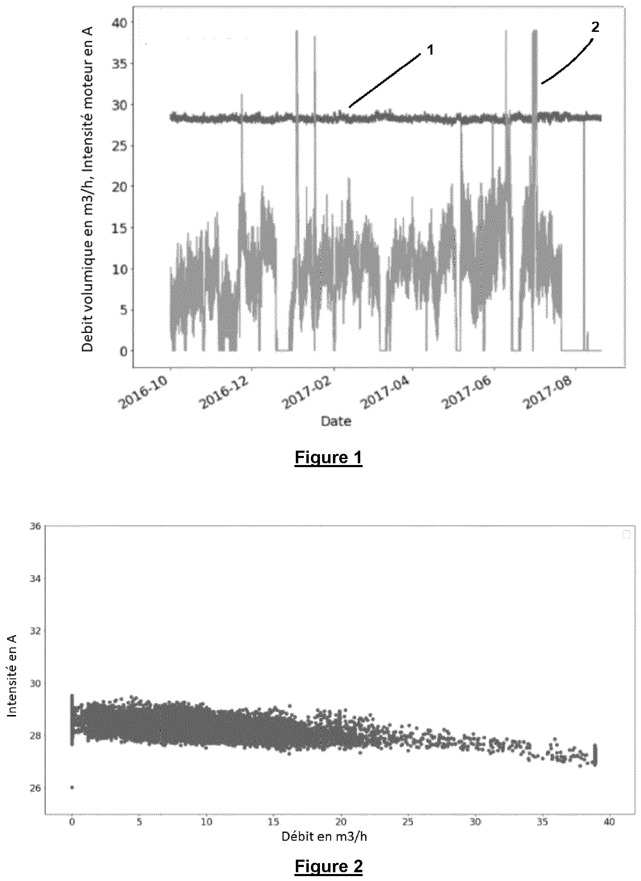

Comme on le verra plus en détails dans ce qui suit, la méthode selon la présente invention comprend la comparaison du débit de gaz (comportant de l'oxygène) injecté par l'appareil, à l'intensité du courant (débit de fluide/effluent) traversant cet appareil. [Fig. 1] annexée : Afin de mieux comprendre l'invention, examinons le graphe en figure 1 annexée, montrant deux signaux : débit d'oxygène (2, en m3/h) et intensité moteur/débit de fluide traversant l'appareil (1, en A), en fonction du temps, pendant une période de temps donnée d'environ 1 an sur 2016/2017. On notera que ces essais ont été réalisés à l'aide d'un appareil tel que celui illustré dans le document WO2012/160300 cité plus haut.

On voit alors qu'il est difficile de tirer des conclusions car les signaux sont relativement bruités, et on ne peut notamment pas déterminer si l'appareil d'injection d'oxygène mis en oeuvre sur cette station fonctionne correctement ou non.

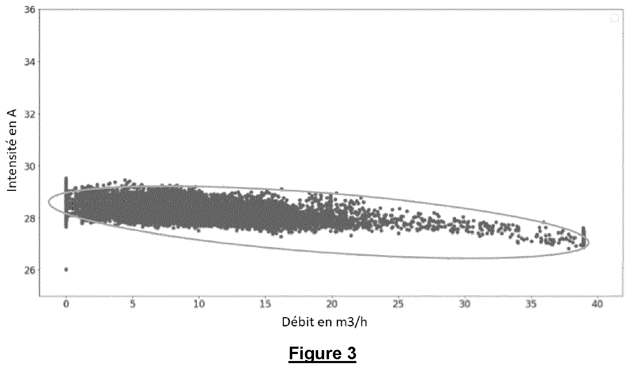

[Fig. 2] annexée et [Fig. 3] annexée : On décide alors (voir figure 2 et figure 3 annexées) de tracer une nouvelle courbe, représentant l'intensité (débit de fluide traversant l'appareil), cette fois ci, non pas en fonction du temps, mais en fonction du débit d'oxygène injecté par l'appareil dans le fluide traité (flux en m³/h).

Le signal est maintenant beaucoup plus cohérent. C'est à partir de ce signal que l'on propose de faire de la maintenance prédictive.

Le signal étant très cohérent, il est possible de tracer une zone (enveloppe oblongue sur la figure 3) délimitant un fonctionnement « normal » de l'unité.

Lorsque le signal va sortir de la zone délimitée pendant une période de temps considérée comme conséquente, par exemple une journée complète, on considère que l'on peut lancer une alerte et demander une maintenance prédictive de l'appareil.

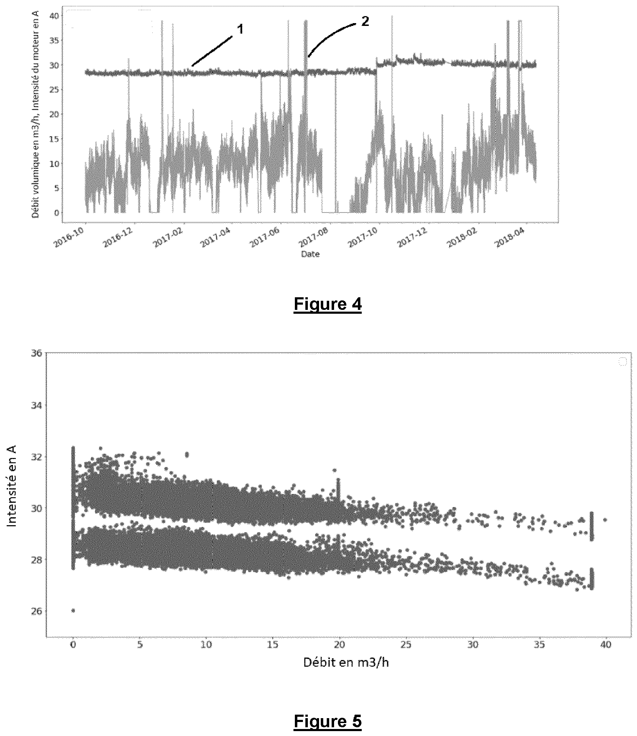

[Fig. 4] annexée et [Fig. 5] annexée : Pour confirmer l'efficacité de cette approche examinons les graphes annexés en figures 4 et 5, qui présentent les même signaux mais sur une période de deux ans sur 2016-2018.

Sur la figure 5, une nouvelle zone s'est rajoutée au-dessus de la zone correspondant au fonctionnement « normal », cette nouvelle zone s'est formée au-dessus de la première, elle correspond à une nouvelle période de fonctionnement de la machine qui a commencé au moment de sa révision périodique qui a eu lieu très précisément fin septembre 2017, comme on peut le voir également nettement sur la figure 4.

L'algorithme selon la présente invention permet de déterminer cette nouvelle période de fonctionnement automatiquement. De la même manière, il va pouvoir détecter des pannes, des pannes à venir, et autres anomalies.

Considérons l'exemple suivant d'algorithme de maintenance prédictive permettant la mise en oeuvre de l'invention :

1. Entraînement sur une période de temps $t_1$ à $t_m$ :

    a. Recueil des données d'intensité (I en A) et de débit de gaz O$_2$ (Q en $m^3/h$) qui définissent par eux-mêmes une zone de bon fonctionnement

$$Z = \{(Q_i, I_i)\}_{i=1..m}$$

2. Utilisation de l'algorithme pour $t > t_m$ :
Etant donné un nouveau pas de temps $t$, calcul de la distance entre le nouveau point de données et la zone de bon fonctionnement avec la formule suivante :

$$d = \sqrt{\frac{(Q(t) - Q_i)^2}{(1m^3/h)^2} + \frac{(I(t) - I_i)^2}{(1A)^2}}$$

permettant, on l'a vu, de détecter une anomalie et d'ordonner une opération de maintenance quand $d > \varepsilon$.

Exemple de durée considérée comme alertante : une journée complète.

Exemple de donnée $\varepsilon$ : 1.0

L'invention concerne alors une méthode d'opération d'une installation de traitement des eaux selon la revendication 1.

**Revendications**

1.   Méthode d'opération d'une installation de traitement des eaux, installation munie d'un appareil d'injection d'un gaz comportant de l'oxygène dans un effluent, la méthode comportant une phase de détection d'anomalies dans le fonctionnement de l'appareil, **se caractérisant en ce que** la phase de détection d'anomalies comporte la mise en oeuvre des mesures suivantes :

   - on dispose de données représentatives de l'état de fonctionnement de l'appareil, données comprenant des relevés en fonction du temps du débit de gaz injecté par l'appareil et des relevés en fonction du temps du débit de fluide traversant l'appareil ;
   - on dispose d'un système d'acquisition et de traitement de ces données, muni d'un algorithme de traitement de ces données, apte à réaliser les déterminations suivantes :

   a) à réaliser une phase d'apprentissage durant laquelle le système acquiert lesdits relevés, établit sur une période de temps d'apprentissage déterminée la courbe de variation du débit de fluide traversant l'appareil en fonction du débit de gaz injecté par l'appareil, et définit une zone/enveloppe englobant cette courbe, zone considérée comme délimitant un fonctionnement normal de l'appareil;
   et
   b) à réaliser une phase d'utilisation de l'algorithme où le système acquiert en temps réel, sur une période de temps déterminée, la courbe de variation du débit de fluide traversant l'appareil en fonction du débit de gaz injecté par l'appareil, et à déterminer si le signal sort de ladite zone/enveloppe pendant une période de temps considérée comme représentative, qu'il faut conclure qu'une alerte doit être lancée, par exemple pour demander une maintenance prédictive de l'appareil .

**Patentansprüche**

1.   Betriebsverfahren einer Wasseraufbereitungsanlage, wobei die Anlage mit einem Gerät zur Einspeisung von Sauerstoff aufweisendem Gas in ein Abwasser versehen ist, wobei das Verfahren eine Phase der Erkennung von Anomalien im Betrieb des Geräts aufweist, **dadurch gekennzeichnet, dass** die Phase der Erkennung von Anomalien die Durchführung der folgenden Maßnahmen aufweist:

   - man verfügt über für den Betriebszustand des Geräts repräsentative Daten, Daten, die zeitabhängige Ablesungen der vom Gerät eingespeisten Gasdurchflussmenge und zeitabhängige Ablesungen der das Gerät durchquerenden Fluiddurchflussmenge enthalten;
   - man verfügt über ein Erfassungs- und Verarbeitungssystem dieser Daten, versehen mit einem Verarbeitungsalgorithmus dieser Daten, das geeignet ist, die folgenden Bestimmungen durchzuführen:

   a) eine Lernphase durchzuführen, während der das System die Ablesungen erfasst, über eine bestimmte Lernzeitperiode die Änderungskurve der das Gerät durchquerenden Fluiddurchflussmenge abhängig von der vom Gerät eingespeisten Gasdurchflussmenge erstellt, und eine diese Kurve umfassende Zone/Hülle definiert, Zone, die als einen normalen Betrieb des Geräts eingrenzend angesehen wird; und
   b) eine Nutzungsphase des Algorithmus durchzuführen, in der das System in Echtzeit über eine bestimmte Zeitperiode die Änderungskurve der das Gerät durchquerenden Fluiddurchflussmenge abhängig von der vom Gerät eingespeisten Gasdurchflussmenge erfasst, und zu bestimmen, wenn das Signal aus der Zone/Hülle während einer als repräsentativ angesehenen Zeitperiode austritt, dass gefolgert werden muss, dass ein Alarm ausgelöst werden muss, zum Beispiel, um eine prädiktive Instandhaltung des Geräts anzufordern.

**Claims**

1.   Method for operating a water treatment plant, which plant is equipped with an apparatus for injecting a gas containing oxygen into an effluent, the method comprising a phase of detecting anomalies in the operation of the apparatus, **characterized in that** the anomaly-detecting phase comprises the implementation of the following measures:

   - data representative of the operating state of the apparatus are provided, said data comprising readings as a function of time of the gas flow rate injected by the apparatus and readings as a function of time of the flow rate of fluid passing through the apparatus;

- a system for acquiring and processing these data is provided, said system being equipped with an algorithm for processing these data, which is capable of carrying out the following determinations:

a) carrying out a training phase in which the system acquires said readings, establishes, over a determined training time period, the curve of variation in the flow rate of fluid passing through the apparatus as a function of the gas flow rate injected by the apparatus, and defines a zone/envelope encompassing this curve, which zone is considered to delineate a normal operation of the apparatus; and

b) carrying out a phase of using the algorithm, in which the system acquires, in real time, over a determined period of time, the curve of variation in the flow rate of fluid passing through the apparatus as a function of the gas flow rate injected by the apparatus, and determining, if the signal departs from said zone/envelope during a period of time considered representative, that it must be concluded that an alarm should be raised, for example with a view to requesting predictive maintenance of the apparatus.

**Figure 1**

**Figure 2**

**Figure 3**

**Figure 4**

**Figure 5**

**RÉFÉRENCES CITÉES DANS LA DESCRIPTION**

**Documents brevets cités dans la description**

- WO 2012160300 A1
- EP 995485 A
- FR 2594112 A1
- WO 2012160300 A